# EUROPÄISCHE PATENTANMELDUNG

(11) **EP 1 584 882 A2**
(43) Veröffentlichungstag der Anmeldung: **12.10.2005**
(21) Anmeldenummer: 05002066.8
(22) Anmeldetag: 01.02.2005
(51) Int. Cl.: F28D 20/00

(54) **Wasserspeicher, insbesondere Schichtenspeicher**

(30) Priorität: 07.04.2004 DE 102004017532
(71) Anmelder: Wolf GmbH, 84048 Mainburg (DE)
(72) Erfinder: Eigl, Peter, Dipl.-Ing., 84091 Attenhofen-Oberwangenbach (DE)
(74) Vertreter: Popp, Eugen

(57) **Zusammenfassung**

Warmwasserspeicher, insbesondere Schichtenspeicher (15), mit einem in dessen unteren Bereich mündenden Kaltwasserzulauf (5), einem aus dessen unterem Bereich wegführenden Kaltwasserabzug (4), einem in dessen oberen Bereich mündenden Warmwasserzulauf (1) und einer aus dessen oberem Bereich wegführenden Warm- bzw. Brauchwasser-Ausleitung (2), wobei die Mündung zumindest des Warmwasserzulaufs (1), insbesondere aber sowohl des Kaltwasserzulaufs (5) als auch des Warmwasserzulaufs (1) jeweils auf sich etwa horizontal erstreckende Strömungsumlenkelemente (16, 17) gerichtet ist.

## Beschreibung

Die vorliegende Erfindung betrifft einen Warmwasserspeicher, insbesondere Schichtenspeicher, mit einem in dessen unteren Bereich mündenden Kaltwasserzulauf, einem aus dessen unterem Bereich wegführenden Kaltwasserabzug, einem in dessen oberen Bereich mündenden Warmwasserzulauf und einer aus dessen oberem Bereich wegführenden Warm- bzw. Brauchwasser-Ausleitung.

Ein derartiger Speicher ist zum Beispiel aus der DE 198 55 482 A1 bekannt. Dort führen der Kaltwasserzulauf und der Warmwasserzulauf jeweils ohne jegliche Strömungsumlenkung in den Speicher hinein mit der Folge, dass nur bei ausreichend großer Dimensionierung des Speichers eine Schichtung zwischen Warmwasser und Kaltwasser innerhalb des Speichers gewährleistet ist. Die bekannte Konstruktion eignet sich also nur dann als Schichtenspeicher, wenn dieser ein Volumen von wenigstens 120 Litern aufweist.

Ganz ähnlich verhält es sich bei dem Speicher gemäß der DE 101 14 505 A1.

Der vorliegenden Erfindung liegt die Aufgabe zugrunde, einen effizienten Schichtenspeicher zu schaffen, dessen Speicherinhalt nur etwa bis zu 50 Liter umfasst. Dementsprechend gilt es, eine effiziente Schichtung zwischen Warmwasser und Kaltwasser innerhalb des Speichers herbeizuführen.

Diese Aufgabe wird erfindungsgemäß durch die kennzeichnenden Merkmale des Anspruches 1 gelöst. Dementsprechend besteht der Kern der vorliegenden Erfindung darin, zumindest das eingeleitete Warmwasser auf kurzer Strecke in horizontaler Richtung, d.h. radial umzulenken, wobei die Umlenkung turbulenzarm erfolgen soll. Damit wird Warmwasser im oberen Bereich des Speichers wirkungsvoll gehalten. Vorzugsweise erfolgt eine derartige Strömungsumlenkung auch im Bereich des Kaltwasserzulaufs; so dass auch das Kaltwasser im Bereich des Kaltwasserzulaufs, d.h. im unteren Bereich des Speichers gehalten wird. Natürlich befinden sich zwischen dem oberen warmen Bereich und dem unteren kalten Bereich des Speichers Zwischenbereiche mit von unten nach oben graduell ansteigender Wassertemperatur.

Die der Mündung von Warmwasser- und/oder Kaltwasserzulauf zugeordneten Strömungsumlenkelemente sind vorzugsweise plattenförmig, insbesondere jedoch topf- bzw. schalenartig ausgebildet. Die Mündung von Kaltwasser- und/oder Warmwasser-Zulauf ist dabei in das Schaleninnere gegen den Schalenboden gerichtet, wobei die Mündung sich jeweils etwa auf Höhe der Oberkante der schalenartigen Strömungsumlenkelemente liegt. Damit wird eine turbulenzarme Umlenkung von eingeleitetem Warmwasser oder eingeleitetem Kaltwasser in radialer Richtung bewirkt, und zwar jeweils auf kürzester Strecke bzw. Speicherhöhe. Ziel ist es, eine gleichmäßige Verteilung bis zu einer Zapfmenge von etwa 15 Liter pro Minute, entsprechend einer Leistungskennzahl von 1,1, zu erreichen. Damit lässt sich aus einem kleinen Speicher mit einem Speichervolumen von nur bis zu 50 Litern etwa die gleiche Wassermenge zapfen wie bei einem herkömmlichen Wassererwärmer mit 120 Litern und mehr. Durch die erfindungsgemäße Strömungsumlenkung im Warmwasserbereich wird eine exakte und gleichmäßige Auslauftemperatur an der Warm- bzw. Brauchwasser-Ausleitung auch beim Nachladen mit Kaltwasser und bei betriebsmäßigen Leistungsschwankungen sichergestellt. Die Folge ist eine harmonische Be- und Entladung des Speichers mit komfortabler Warmwasserleistung. Der Speicher selbst besteht vorzugsweise aus Edelstahl und weist einen Durchmesser von etwa 300 mm auf. Die schalenartigen Strömungsumlenkelemente bestehen vorzugsweise ebenfalls aus Edelstahl und weisen einen Durchmesser von etwa 80 mm bei einer Schalenhöhe von etwa 20-30 mm auf. Damit wird eine schnelle Abbremsung und gute Verteilung des eingeleiteten Warmwassers und/oder Kaltwassers erreicht.

Vorzugsweise trifft der Warmwasserstrahl mittig auf die Prallfläche des schalenartigen Strömungsumlenkelements auf, wobei diese in einem Durchmesserbereich von etwa 40-60 mm eine zur Mündung des Warmwasserzulaufs hin gerichtete Wölbung von etwa 5 mm aufweist. Das Warmwasser-Rohr, durch welches Warmwasser in den Speicher eingeleitet wird, besitzt einen Durchmesser von etwa 14-18 mm, insbesondere etwa 16 mm, wobei größere Rohrdurchmesser Strömungsvorteile bringen, aber auch teuerer in der Handhabung sind. Die Verformung von Rohren mit einem Strömungsdurchmesser von mehr als 16 mm ist aufwendig und dementsprechend teuer.

Die Mündung von Warmwasser- und Kaltwasser-Zulauf liegt bei einer bevorzugten Ausführungsform zwischen dem jeweils zugeordneten schalenartigen Strömungsumlenkelement einerseits und einer Rückprallscheibe andererseits, die zu einer noch gleichmäßigeren Verteilung des eingeleiteten Warm- und oder Kaltwassers in radialer Richtung führt, wobei diese Ausführungsform sich besonders für größere Wasservolumen anbietet.

Wie bereits erwähnt, ist vorzugsweise auch dem Kaltwasserzulauf eine Strömungsumlenkschale zugeordnet, die ebenso ausgebildet bzw. konturiert sein kann wie die dem Warmwasserzulauf zugeordnete Umlenk- bzw. Leitschale. Das zulaufende Kaltwasser tritt jedoch vorzugsweise im Randbereich der Schale ein, und zwar insbesondere dann, wenn diese mit dem Kaltwasseranschluß verschweißt ist. Dies ist auch möglich, weil der Kaltwasserzulaufstutzen in einem sog. Handlochdeckel eingeschweißt ist, der eine spezielle Kontur aufweist, die eine schnelle Vergleichmäßigung und Verteilung der Strömung begünstigt.

Da durch die erfindungsgemäßen Strömungsumlenkelemente eine schnelle horizontale Wasserverteilung vor allem im Warmwasser-Zapfbetrieb ermöglicht wird, kann auf einen herkömmlichen Speichertemperaturfühler unmittelbar im Wasser bzw. in einer gesonderten Tauchhülse verzichtet werden. Der Speichertemperaturfühler lässt sich bei der erfindungsgemäßen Ausführung kostengünstig als sog. Anlegefühler ausführen. Die Reaktionszeit für das Signal zur Nachladung des Speichers mit Kaltwasser ist ausreichend schnell. Die Befestigung erfolgt nur über zwei Schweißbolzen kurz über oder unter der Rund-Schweißnaht zwischen Boden und Zylindermantel des Speichers. Diese Anordnung erlaubt einen komfortablen Zugang von vorne. Auch jede andere Art der Anbringung des Anlegefühlers ist denkbar, solange nur ein ausreichend direkter Kontakt zwischen der Speicherwändung und dem Temperaturfühler sichergestellt ist.

Um der Forderung nach sog. KTW- und WRC-geprüften Bauteilen nachzukommen, hat es sich als vorteilhaft erwiesen, das Konzept einer Edelstahl-Schweißkonstruktion umzusetzen.

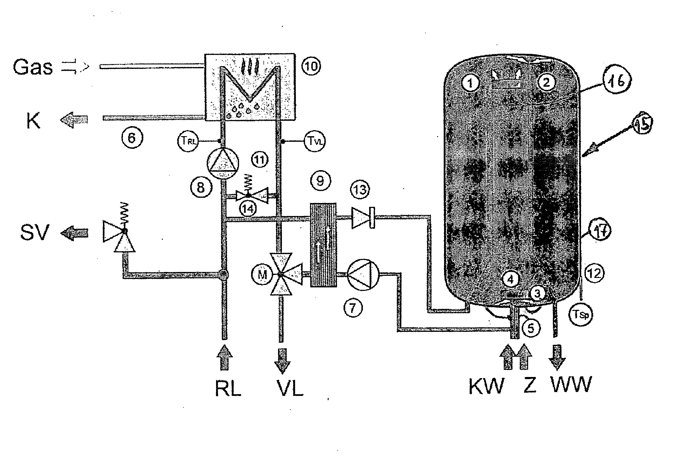

Nachstehend wird eine bevorzugte Ausführungsform eines erfindungsgemäßen Schichtenspeichers anhand der beigefügten Zeichnung näher erläutert. Diese zeigt - in schematischer Darstellung eine Gasbrennwerttherme mit Schichtenspeicher. Der Schichtenspeicher hat die Bezugsziffer 15. In den unteren Bereich mündet ein Kaltwasserzulauf 5. Des weiteren führt aus dem unteren Bereich ein Kaltwasserabzug weg, der mit einem Sekundärkreis in Fluidverbindung steht, welcher einen Plattenwärmetauscher 9 mit Thermenmodul, eine Speicherladepumpe 7 und ein Rückschlagventil 13 umfaßt, wobei das Rückschlagventil 13 in der dem Plattenwärmetauscher nachgeordneten Warmwasserzulaufleitung 1 angeordnet ist. Damit soll verhindert werden, dass Warmwasser aus dem oberen Bereich des Schichtenspeichers 15 in den Sekundärkreis zurückdrückt. Die Warmwasserzulaufleitung mündet in den oberen Bereich des Schichtenspeichers 15, wobei dieser Warmwasserzulauf mit der Bezugsziffer 1 gekennzeichnet ist. Des weiteren führt aus dem oberen Bereich des Schichtenspeichers 15 eine Warm- bzw. Brauchwasser-Ausleitung 2 weg. Diese. Leitung umfasst außerhalb des Schichtenspeichers 15 einen nicht dargestellten Zapfhahn.

Im übrigen bedeuten die nachstehend nicht näher erläuterten Teile Gasbrennwerttherme folgendes:
- 6 =: Kondensatablauf
- 7 =: Speicherladepumpe
- 8 =: x Heizkreispumpe PWM-modulierend
- 9 =: Plattenwärmetauscher im Thermenmodul
- 10 =: Heizwasserwärmetauscher
- 11 =: 3-Wege-Umschaltventil im Thermenmodul
- 13 =: Rückschlagventil
- 14 =: integriertes Überströmventil

Wie der anliegenden Zeichnung sehr gut entnommen werden kann, ist sowohl die Mündung des Warmwasserzulaufs 1 als auch die Mündung des Kaltwasserzulaufs 5 jeweils auf ein sich etwa horizontal erstreckendes Strömungsumlenkelement 16, 17 gerichtet. Die Strömungsumlenkelemente 16, 17 sind topf- bzw. schalenförmig ausgebildet, wobei der Rand jeweils der Mündung von Warmwasser- und Kaltwasserzulauf zugewandt ist. Die Mündungen von Kaltwasser- und Warmwasser-Zulauf liegen jeweils etwa auf Höhe der Oberkante der Umlenkschalen 16, 17.
Des weiteren sei darauf hingewiesen, dass die Prallfläche bzw. der Boden der schalenartigen Strömungsumlenkelemente 16, 17, auf die die Mündung von Kaltwasser- und Warmwasser-Zulauf gerichtet ist, in Richtung zur jeweiligen Mündung hin gewölbt ist. Die Mündung des Warmwasser-Zulaufs 1 ist des weiteren zentral auf die Prall- bzw. Bodenfläche des zugeordneten Strömungsumlenkelements 16 hin gerichtet. Auch die Mündung des Kaltwasser-Zulaufs kann zentral angeordnet sein, ist jedoch vorzugsweise randseitig auf die Prall- bzw. Bodenfläche des zugeordneten Strömungsumlenkelements 17 hin gerichtet.

Wie bereits einleitend ausgeführt, beträgt der Durchmesser des Speichers 15 etwa 250-350 mm, insbesondere etwa 300 mm bei einem Speichervolumen von bis zu etwa 50 Liter. Die schalenartigen Strömungsumlenkelemente weisen einen mittleren Durchmesser von etwa 80 mm und eine Randhöhe von etwa 20-30 mm auf. Bei zur. Mündung von Warmwasser- und Kaltwasser-Zulauf hin gerichteter Wölbung der Prallfläche des Strömungsumlenkelements 16 bzw. 17 erstreckt sich diese über einen mittleren Durchmesser von etwa 40-60 mm und weist eine Höhe von etwa 4-6 mm, insbesondere etwa 5 mm auf.

Die Mündung des Warmwasserzulaufs ist entsprechend der anliegenden Zeichnung innerhalb des Speichers nach unten gerichtet. Die Mündung des Kaltwasserzulaufs ist nach oben gerichtet. Der Strömungsdurchmesser des Warmwasserzulaufs beträgt etwa 12-18 mm, insbesondere etwa 16 mm. Der Strömungsdurchmesser des Kaltwasserzulaufs beträgt etwa 15-20 mm.

Die Strömungsumlenkelemente 16, 17 bestehen ebenso wie der Speicher vorzugsweise aus Edelstahl. Es handelt sich dabei um Preß- oder Tiefziehteile.

Ein Speichertemperaturfühler ist als Anlegefühler 12 an der Außenseite des Speichers 15, und zwar vorzugsweise im Übergangsbereich zwischen Speichermantel und Speicherboden angeordnet.

Der Kaltwasserabzug ist in der anliegenden Zeichnung mit der Bezugsziffer 4 gekennzeichnet, während mit der Bezugsziffer 3 die radiale Kaltwasserverteilung bedingt durch die dem Kaltwasserzulauf 5 zugeordnete Strömungsumlenkschale 17 gekennzeichnet ist.

Im übrigen bedeuten in der anliegenden Zeichnung die Buchstaben was folgt:
- RL =: Rücklauf
- VL =: Vorlauf
- KW =: Kaltwasser
- WW =: Warmwasser
- Z =: Zirkulationsleitung
- K =: Kondensat

Sämtliche in der Anmeldung offenbarten Merkmale werden als erfindungswesentlich beansprucht, soweit sie einzeln oder in Kombination gegenüber dem Stand der Technik neu sind.

### Bezugszeichen

- 1: Warmwasserzulauf
- 2: Warm- bzw. Brauchwasser-Ausleitung
- 3: Radialströmung des Altwassers
- 4: Kaltwasserabzug
- 5: Kaltwasserzulauf
- 15: Schichtenspeicher
- 16: Strömungsumlenkschale
- 17: Strömungsumlenkschale

## Patentansprüche

1. Warmwasserspeicher, insbesondere Schichtenspeicher (15), mit einem in dessen unteren Bereich mündenden Kaltwasserzulauf (5), einem aus dessen unterem Bereich wegführenden Kaltwasserabzug (4), einem in dessen oberen Bereich mündenden Warmwasserzulauf (1) und einer aus dessen oberem Bereich wegführenden Warm- bzw. Brauchwasser-Ausleitung (2),
**dadurch gekennzeichnet, dass**
die Mündung zumindest des Warmwasserzulaufs (1), insbesondere aber sowohl des Kaltwasserzulaufs (5) als auch des Warmwasserzulaufs (1) jeweils auf sich etwa horizontal erstreckende Strömungsumlenkelemente (16, 17) gerichtet ist.

2. Warmwasserspeicher nach Anspruch 1,
**dadurch gekennzeichnet, dass**
die Strömungsumlenkelemente (16, 17) plattenförmig, insbesondere topf- bzw. schalenartig ausgebildet sind.

3. Warmwasserspeicher nach Anspruch 2,
**dadurch gekennzeichnet, dass**
bei topf- bzw. schalenartiger Ausbildung der Strömungsumlenkelemente (16, 17) die Mündung von Kaltwasser- und/oder Warmwasser-Zulauf in das Schaleninnere gerichtet ist.

4. Warmwasserspeicher nach Anspruch 2 oder 3,
**dadurch gekennzeichnet, dass**
die Mündung von Kaltwasser- und/oder Warmwasser-Zulauf etwa auf Höhe der Oberkante der topf- bzw. schalenartigen Strömungsumlenkelemente (16, 17) liegt.

5. Warmwasserspeicher nach einem der Ansprüche 1 bis 4,
**dadurch gekennzeichnet, dass**
die Prall- bzw. Bodenfläche der Strömungsumlenkelemente (16, 17), auf die
die Mündung von Kaltwasser- und/oder Warmwasser-Zulauf gerichtet ist, in Richtung zur besagten Mündung hin gewölbt ist.

6. Warmwasserspeicher nach einem der Ansprüche 1 bis 5,
**dadurch gekennzeichnet, dass**
die Mündung des Warmwasserzulaufs (1) zentral auf die Prallfläche des zugeordneten Strömungsumlenkelements (16), die Mündung des Kaltwasserzulaufs (5) dagegen entweder ebenfalls zentral oder randseitig auf die Prallfläche des zugeordneten Strömungsumlenkelements (17) gerichtet ist.

7. Warmwasserspeicher nach einem der Ansprüche 1-6,
**dadurch gekennzeichnet, dass**
bei einem Durchmesser desselben in der Größenordnung von etwa 250 mm bis 350 mm, insbesondere etwa 300 mm und einem Speichervolumen von bis zu etwa 50 Liter die schalenartigen Strömungsumlenkelemente einen mittleren Durchmesser von etwa 80 mm und eine Randhöhe von etwa 20-30 mm aufweist.

8. Warmwasserspeicher nach einem der Ansprüche 5-7,
**dadurch gekennzeichnet, dass**
bei zur Mündung von Warmwasser- und/oder Kaltwasserzulauf hin gerichteter Wölbung der Prallfläche des Strömungsumlenkelements (16, 17) diese sich über einen mittleren Durchmesser von etwa 40-60 mm erstreckt und eine Höhe von etwa 4-6 mm, insbesondere etwa 5 mm aufweist.

9. Warmwasserspeicher nach einem der Ansprüche 1-8,
**dadurch gekennzeichnet, dass**
die Mündung des Warmwasserzulaufs (1) innerhalb des Speichers (15) nach unten gerichtet ist und einen Strömungsdurchmesser von etwa 12-18 mm, insbesondere etwa 15-16 mm aufweist.

10. Warmwasserspeicher nach einem der Ansprüche 1-9,
**dadurch gekennzeichnet, dass**
die Strömungsumlenkelemente (16, 17) aus Edelstahl, insbesondere als Preß- oder Tiefziehteil ausgebildet sind.

11. Warmwasserspeicher nach einem der Ansprüche 1-10,
**dadurch gekennzeichnet, dass**
ein Speichertemperatur-Fühler als Anlegefühler (12) an der Außenseite des Speichers (15), insbesondere im Übergangsbereich zwischen Speichermantel und Speicherboden angeordnet ist.

12. Warmwasserspeicher nach einem der Ansprüche 1-11,
**dadurch gekennzeichnet, dass**
die Mündung des Kaltwasserzulaufs (5) innerhalb des Speichers (15) nach oben gerichtet ist und einen Strömungsdurchmesser von 15-20 mm aufweist.

13. Warmwasserspeicher nach einem der Ansprüche 1-12,
**dadurch gekennzeichnet, dass**
die Mündung von Warmwasser- und/oder Kaltwasserzulauf (1 bzw. 5) zwischen dem jeweils zugeordneten schalenartigen Strömungsumlenkelement (16, 17) und einer Rückprallscheibe liegt.
